**Europäisches Patentamt**

**European Patent Office**

**Office européen des brevets**

(11) Veröffentlichungsnummer: **0 076 356 B1**

# EUROPÄISCHE PATENTSCHRIFT

(45) Veröffentlichungstag der Patentschrift: **07.01.88**

(21) Anmeldenummer: **82101068.3**

(22) Anmeldetag: **12.02.82**

(51) Int. Cl.⁴: **G 01 N 21/31**

(54) **Verfahren und Vorrichtung zur Messung der Konzentration einer IR-, NDIR-, VIS- oder UV-Strahlung absorbierenden Komponente eines Komponentengemischs.**

(30) Priorität: **22.09.81 DE 3137658**

(43) Veröffentlichungstag der Anmeldung:
**13.04.83 Patentblatt 83/15**

(45) Bekanntmachung des Hinweises auf die Patenterteilung:
**07.01.88 Patentblatt 88/1**

(84) Benannte Vertragsstaaten:
**AT BE CH FR IT LI LU NL**

(56) Entgegenhaltungen:
**EP - A - 0 032 852**
**DE - A - 2 643 331**
**DE - A - 3 021 041**
**US - A - 3 878 107**
**US - A - 3 994 592**
**US - A - 4 087 690**

(73) Patentinhaber: **H. MAIHAK AG, Semperstrasse 38, D-2000 Hamburg 60 (DE)**

(72) Erfinder: **Nestler, Volker, Dr., Dipl.Phys., Garleff-Bindtweg 58, D-2000 Hamburg 65 (DE)**
Erfinder: **Olsowski, Wolfgang, Dr., Dipl.Phys., Bekwisch 5, D-2000 Norderstedt (DE)**

(74) Vertreter: **Meyer-Roxlau, R.F., Dipl.-Ing. Patentanwalt, Mühlbaurstrasse 38b, D-8000 München 80 (DE)**

**Beschreibung**

Die Erfindung betrifft zum einen ein Verfahren und zum anderen eine Vorrichtung zur Messung der Konzentration eines IR-, NIR-, VIS- oder UV-Strahlung absorbierenden Gases in einer Gasmatrix oder einer in einem Lösungsmittel gelösten Substanz.

Mit Hilfe von nichtdispersiven Gaskonzentrationsmessgeräten, also auf optischer Basis arbeitenden Gasanalysatoren, die weder Gitter noch Prismen enthalten, wird der Messwert gewöhnlich aus dem Vergleich zweier Lichtströme gewonnen, nämlich einem vom Messobjekt stark beeinflussten Lichtstrom und einem vom Messobjekt in geringerem Umfang oder gar nicht beeinflussten Lichtstrom.

Für diese Art der Konzentrationsmessung sind Messverfahren und -geräte bekannt, bei denen die Lichtströme gleichzeitig geometrisch voneinander getrennte Lichtwege durchlaufen (erste Möglichkeit) oder bei denen die beiden Lichtströme denselben Lichtweg zeitlich nacheinander durchlaufen (zweite Möglichkeit).

Bei der Verfahrensweise nach der zweiten Möglichkeit werden beispielsweise zwei mit unterschiedlichen Gasen oder gelösten Substanzen gefüllte Filterküvetten oder zwei Interferenzfilter, deren Zentrumswellenlängen sich unterscheiden, in periodischer Folge in den Strahlengang eingeführt. Die Filterfunktionen sind dabei so gewählt, dass jeweils nur einer der beiden aufeinander folgenden Lichtströme wesentlich vom Messobjekt beeinflusst werden kann. Bei Messgeräten der oben erwähnten zweiten Möglichkeit handelt es sich bei der Verwendung von Gasen oder gelösten Substanzen als Filter («negative Selektivmodulation») um Korrelationsphotometer, während es sich bei der Verwendung von Interferenzfiltern («positive Selektivmodulation») um Bifrequenzphotometer handelt. Sowohl Korrelations- als auch Bifrequenzphotometer könne mit derselben elektronischen Einrichtung zur Auswertung betrieben werden.

Aus Rev. Sci. Instrum., 49, Seite 1520 (1978) ist ein Korrelationsphotometer bekannt, bei dem der Quotient $(I_M-I_R)/I_R$ als Mass für die Konzentration des Messobjekts im optischen Strahlengang verwendet wird. Dabei bedeuten $I_M$ und $I_R$ die Intensitäten des Mess- bzw. Referenzsignals. Das Differenzsignal $I_M-I_R$ wird dabei durch phasenempfindliche Gleichrichtung des Detektorsignals mit der Frequenz $\omega$ gewonnen, wobei $\omega$ die Modulationskreisfrequenz ist.

Zur Bestimmung von $I_R$ wird während der Referenzsignalphase die Lichtintensität unter Verwendung mechanischer Mittel zusätzlich mit der Frequenz $\omega'$ moduliert, die weit höher als $\omega$ liegt, und das Detektorsignal mit der Frequenz $\omega'$ phasenempfindlich gleichgerichtet. Hieran anschliessend wird der erwähnte Quotient gebildet.

Aus US-A-3 878 107 sind ein Verfahren und eine Vorrichtung zur Messung kleiner Mengen eines Gases enthalten in anderen Gasen bekannt, wobei das die Messkomponente enthaltende Komponentengemisch in einem Messraum enthalten ist, der Bestandteil einer Gas-Wechselzelle ist. Die Gas-Wechselzelle besteht ihrerseits aus zwei hermetisch gegeneinander abgeschlossenen, nebeneinanderliegenden hablzylindrischen Gasräumen, ist insgesamt in Rotation versetzbar, und wird von der Strahlung einer Strahlenquelle durchsetzt, auf die ein Modulator einwirkt. Der Modulator besteht aus einem Blendenrad mit einer Vielzahl von in Rotationsrichtung unmittelbar aufeinanderfolgenden unterschiedlichen Segmenten, wobei jedes zweite Segment für die Strahlung undurchlässig ist. Es wird daher in einem nachgeschalteten Fotodetektor von zwei unterschiedlichen, periodisch aufeinanderfolgenden Spektralzuständen in Verbindung mit Dunkelphasen Gebrauch gemacht. Diese Dunkelphasen dienen jedoch in erster Linie zur Mehrfach-Unterteilung der Spektralzustände hervorgerufen durch die Zweifach-Unterteilung der Gas-Wechselzelle in Drehrichtung und die Mehrfach-Unterteilung des Modulators in Drehrichtung, um so eine grosse Differenz der Messfrequenzen zu erzielen. So wird nach den ausdrücklichen Angaben die Intensitätsmodulation mit 360 Hz ausgeführt, während die Wellenlängenmodulation mit einer Frequenz von 30 Hz erfolgt. Während bei dem bekannten Verfahren also zunächst das Signal mit einer Trägerfrequenz von 360 Hz verstärkt und demoduliert wird, erfolgt die Weiterverarbeitung unter Verwendung eines 30 Hz-Signal der Frequenzseitenbänder. Die beiden Messkanäle liegen also verhältnismässig weit auseinander, wobei sie zugleich voneinander unabhängig sind, so dass keine Optimierung des resultierenden Signal/Rausch-Verhältnisses möglich ist. Eine solche Optimierung ist auch mittels des bekannten Verfahrens nicht angestrebt; vielmehr soll dieses einer Vereinfachung und Erleichterung des Abgleichs dienen, wozu die Strahlungsenergie-Durchlässigkeit in dem von der Gas-Wechselzelle gebildeten Korrelationszellensystem mit abwechselnd beaufschlagten Gaszellen zunächst teilweise abgeglichen und sodann der Abgleich des Systems elektronisch durchgeführt wird. Zur Ermöglichung dieses Abgleichs selbst bei Schwankungen der Systemverstärkung erfolgt der elektronische Abgleich der verbleibenden kleinen optischen Unbalance durch multiplikative Signalverarbeitung.

Aus DE-A-2 643 331 ist in Verbindung mit einer Vorrichtung zur Messung der Strahlungsabsorption mittels modulierter Strahlung eine Signalauswertung bekannt. Die Vorrichtung zur Messung der Strahlungsabsorption besteht dabei jedoch in einem Zweistrahlphotometer, so dass für die Signalauswertung auch zwei auf die unterschiedlichen Strahlengänge zurückzuführende Signale zur Verfügung stehen. Die Verwendung dieser bekannten Signalauswertung in Verbindung mit dem Messverfahren der US-A erscheint daher aus naheliegenden Gründen nicht möglich, da bei Weglassung des zweiten Strahls die zweite Signalkomponente für die Quotientenbildung fehlt.

Der Erfindung liegt die Aufgabe zugrunde, das Verfahren und die Vorrichtung der erörterten US-A so auszubilden, dass auf der Basis der Korrelations- oder Bi-Frequenzphotometrie mindestens ein Verfahren bzw. eine Vorrichtung erreicht wird, die einen wesentlich geringeren mechanischen Aufwand erforderlich machen und gleichzeitig die Linearität des Rohmesswertes am Eingang der Linearisierungschaltung verbessern; letzteres soll der Verbesserung der Messgenauigkeit insbesondere bei hohen Messobjektkonzentrationen dienen.

Erfindungsgemäss wird diese Aufgabe in verfahrenstechnischer bzw. vorrichtungstechnischer Hinsicht durch die Gesamtheit der Merkmale der Patentansprüche 1 bzw. 6 gelöst.

Vorteilhafte Weiterbildungen sowohl in verfahrenstechnischer als auch in vorrichtungstechnischer Hinsicht sind aus den jeweils zugehörigen Unteransprüchen 2 bis 5 bzw. 7 bis 12 zu ersehen.

Erfindungsgemäss wird also im Wege der nichtdispersiven Einstrahl-Photometrie unter Verwendung eines Gasfilter- oder Interferenzfilter-Karussells als Modulationseinrichtung gearbeitet. Durch die Modulation werden der Messstrahlung, die beim Durchgang durch die Messstrecke eine für die Messsubstanz spezifische spektrale Absorption erfährt, zeitlich nacheinander zwei unterschiedliche spektrale Verteilungsfunktionen aufgeprägt, die durch Dunkelphasen voneinander getrennt sind. Die so modulierte Strahlung trifft dann auf einen Detektor, dessen Ausgangssignal einer elektronischen Fourieranalyse unterzogen wird. Der Quotient aus erstem und zweitem Fourierkoeffizienten stellt das Mass für die Konzentration der optisch absorbierenden Substanz dar. Die erfindungsgemässe Lösung ist im Vergleich zur Zweistrahl-Photometrie einfach in konstruktiver Hinsicht des zugehörigen apparativen Aufbaus, einfach abzugleichen, auch bei Freistrahlverfahren einsetzbar und unempfindlich gegenüber Veränderungen im Strahlengang, wie sie beispielsweise durch Fensterverschmutzungen hervorgerufen werden.

Im folgenden wird die Erfindung beispielhaft und unter gleichzeitiger Bezugnahme auf die Zeichnungen weiter ins einzelne gehend erläutert; in den Zeichnungen zeigen:

Fig. 1 schematisch den grundsätzlichen Aufbau einer erfindungsgemässen Messvorrichtung,

Fig. 2 den Blendenradmodulator der Fig. 1,

Fig. 3A den periodischen Wechsel der Lichtintensität in der Strahlung, wenn keine Messkomponente vorliegt, die eine Strahlungsabsorption zur Folge hätte,

Fig. 3B schematisch die entsprechende Spektralverteilung der Intensität,

Fig. 3C den Transmissionsverlauf bei durch die Messkomponente bedingter Absorption,

Fig. 3D die Abschwächung der einen Lichtintensität bei unveränderter Aufrechterhaltung der anderen Lichtintensität,

Fig. 3E den Effekt der Messkomponente auf die zeitliche Abfolge der Lichtintensität,

Fig. 4 das Blockschaltbild der Messwertverarbeitungselektronik,

Fig. 5A für ein bestimmtes Anwendungsbeispiel aus der Gasanalyse die zugehörigen Messergebnisse und

Fig. 5B für ein anderes Anwendungsbeispiel aus der Gasanalyse die hierzu gehörenden Messergebnisse.

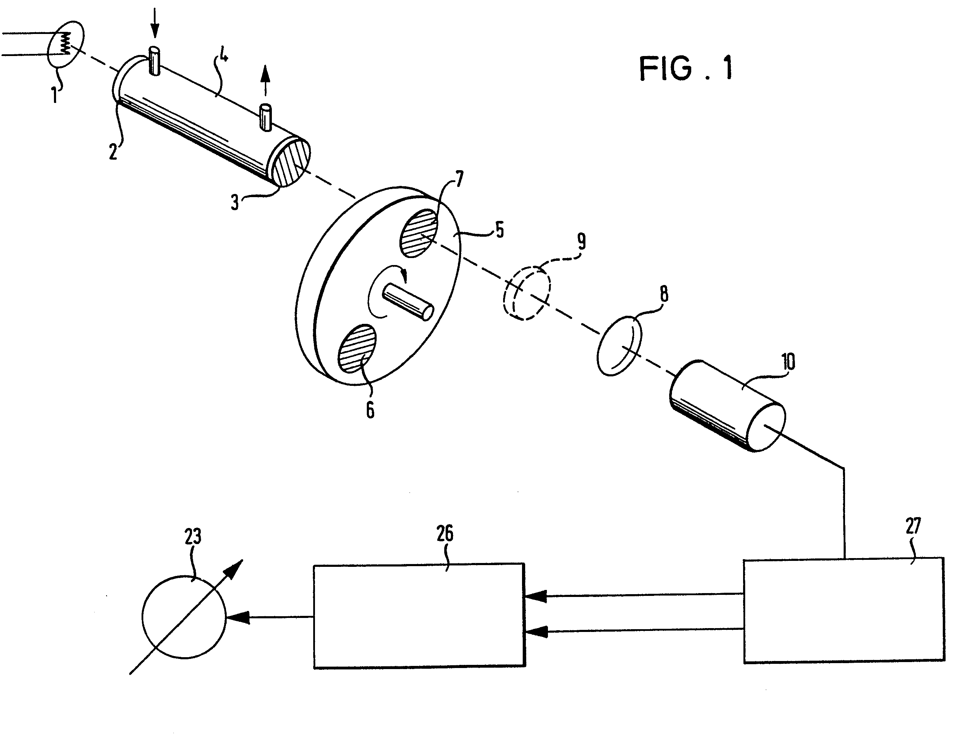

Das Einstrahl-Photometer gemäss Fig. 1 verfügt in seinem grundsätzlichen Aufbau über einen Strahler 1, nämlich beispielsweise im IR-Bereich einen thermischen Strahler, der eine Strahlung emittiert und über einen Messraum 4 mit der darin enthaltenen Messsubstanz, welcher Messraum 4 von der Messstrahlung durchsetzt wird. Der Messraum 4 ist gegenüber seiner Umgebung mit Hilfe von Fenstern 2 und 3 abgedichtet, die im interessierenden Spektralbereich für die Messstrahlung durchlässig sind. Der Messraum 4 kann beispielsweise in einem geschlossenen Raum, insbesondere in einer Küvette, bestehen; er kann aber auch ein Prozessraum selbst sein, so dass es sich dann bei dem Messverfahren um ein Freistrahlverfahren handelt.

Im Messraum 4 erfährt die spektrale Verteilung der Lichtintensität eine für die Konzentration des Messobjekts charakteristische Veränderung. Nach dem Austritt aus dem Messraum 4 durch das Fenster 3 hindurch wird die Strahlung durch ein mit einer Kreisfrequenz $\omega$ rotierendes Blendenrad 5 moduliert, und zwar sowohl hinsichtlich der Intensität als auch in spektraler Hinsicht. Die Wirkungsweise des als Modulator wirkenden Blendenrads 5 wird weiter unten noch genauer erläutert werden.

Im Anschluss an die vom Blendenrad 5 gebildete Modulationseinrichtung wird die Strahlung mittels einer Linse 8 auf einen Detektor 10 fokussiert, der im IR- und im NIR-Bereich beispielsweise ein pyroelektrischer Empfänger oder ein Halbleiterdetektor sein kann. Für den Fall, dass die im Blendenrad 5 vorgesehenen Filter 6 und 7 Gasfilter sind, befindet sich im Strahlengang zusätzlich ein feststehendes Interferenzfilter 9. Das Modulatorblendenrad 5 kann auch zwischen dem Strahler 1 und dem Messraum 4 oder sogar im Messraum 4 selbst angeordnet sein. Im übrigen verfügt das Photometer der Fig. 1 über einen Fourieranalysator 27, einen Dividierer oder Quotientenbilder 26 und eine Anzeigevorrichtung 23.

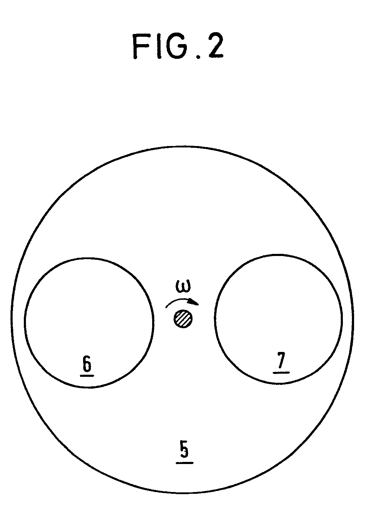

Die in Fig. 2 schematisch dargestellte beispielhafte Ausführungsform des Modulatorblendenrads 5 verfügt über zwei Interferenzfilter 6, 7, die abwechselnd mit der Kreisfrequenz $\omega$ – bezogen auf das Blendenrad 5 – in den Strahlengang geschwenkt werden, so dass die Strahlung wegen der Vorsehung von insgesamt zwei Filtern mit der Kreisfrequenz $2\omega$ moduliert wird.

Das Transmissionsmaximum des Filters 6 liegt bei derjenigen Wellenlänge $\lambda_A$, bei der die in ihrer Konzentration zu messende Komponente A ihre Absorptionsbande aufweist. Wenn sich das Interferenzfilter 6 als erstes im Strahlengang befindet, folgt anschliessend das Interferenzfilter 7 mit der Zentrumswellenlänge $\lambda_0$, die nicht im Bereich der Absorptionsbanden der zu messenden Komponente A liegt.

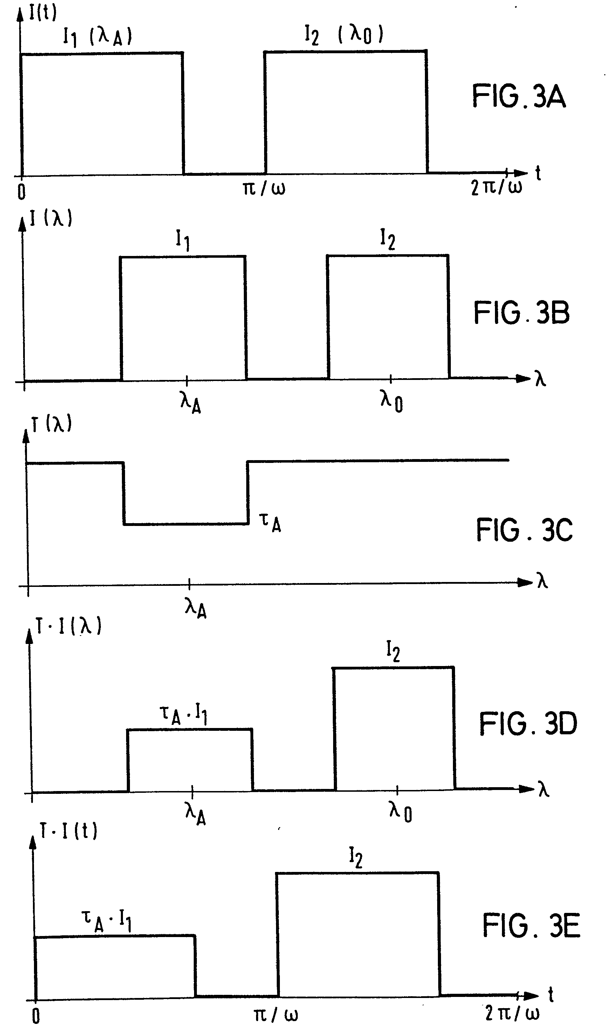

Insgesamt unterliegt die Strahlung des Strahlers 1 also einer zeitlichen und spektralen Modulation, wie dies in den Fig. 3A bis 3E schematisch dargestellt ist.

Fig. 3A zeigt den periodischen Wechsel der Lichtintensität, ohne dass die Messkomponente vorliegt, weshalb keine Strahlungsabsorption verursacht ist. Fig. 3B zeigt schematisch die entsprechende Spektralverteilung der Intensitäten $I_1$ und $I_2$.

Die Absorption durch die Messkomponente A verursacht einen Defekt in der Transmission ($\tau_A$ 1) der Messstrecke bei einer spezifischen Spektralstelle $\lambda_A$ (Fig. 3C). Dies führt zu einer Abschwächung der Lichtintensität $I_1$ bei $\lambda_A$, während die Lichtintensität $I_2$ unbeeinflusst bleibt (Fig. 3D).

In Fig. 3E ist der Effekt der Messkomponente A auf die zeitliche Abfolge der Lichtintensität dargestellt. Der Messeffekt besteht also in dem Unterschied der Signale der Fig. 3A und 3E.

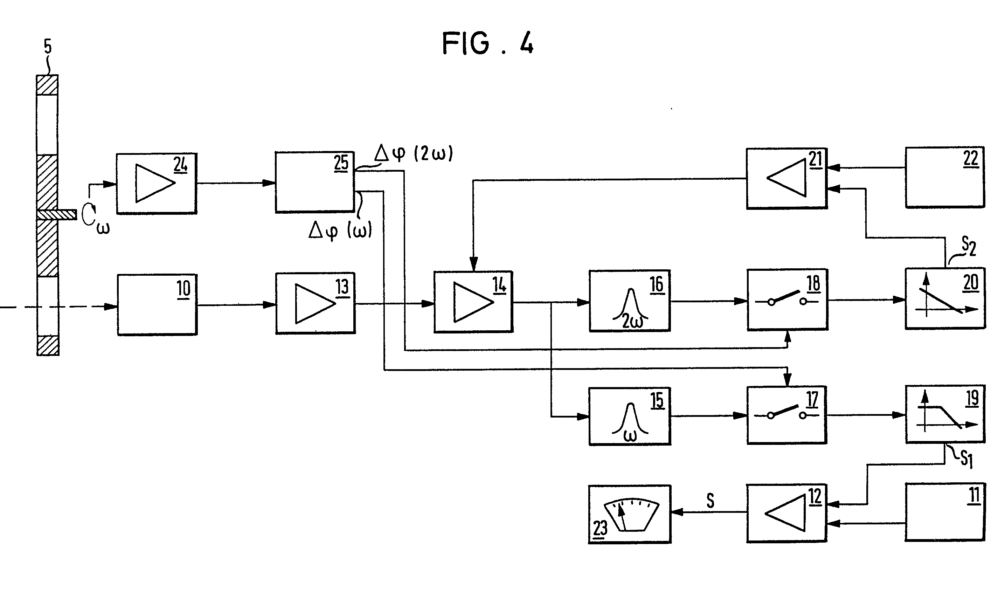

Die Auswertung des Ausgangssignals des Detektors 10 erfolgt mittels einer Messwertverarbeitungselektronik, die im wesentlichen aus einem Zwei-Kanal-Lock-In-Verstärker besteht, dessen Arbeitsweise das Blockschaltbild der Fig. 4 erläutert. Die vom Modulatorblendenrad 5 mit der Kreisfrequenz $\omega$ modulierte Intensität des Lichts des Strahlers 1 wird im Detektor 10 in ein elektrisches Signal umgesetzt, das zunächst durch einen Vorverstärker 13 und dann durch einen regelbaren Verstärker 14 angehoben wird. Anschliessend erfolgt eine Zerlegung des so behandelten Detektorsignals in Teile seines Frequenzspektrums (Fourieranalyse).

In einem ersten Messkanal wird der Signalanteil mit der Frequenz $\omega$ durch ein selektives Filter 15 extrahiert und durch einen nachgeschalteten Gleichrichter 17 phasensynchron zu $\omega$ gleichgerichtet; dies führt dann nach anschliessender Glättung in einem Tiefpass 19 zu einem geglätteten Signal $S_1$ für den ersten Messkanal.

Ähnlich wird im zweiten Messkanal verfahren. Dort selektiert ein Filter 16 den Signalanteil mit der Frequenz $2\omega$, das durch einen Gleichrichter 18 phasensynchron zu $2\omega$ gleichgerichtet wird. Die Steuersignale für $\omega$ und $2\omega$ werden durch einen Referenzsignalverstärker 24 und einen Phasenschieber 25 erzeugt. Das Signal des zweiten Messkanals wird durch einen Integrator 20 gesiebt und auf einen Regelverstärker 21 gegeben, der das Signal $S_2$ mit einer Referenzspannung eines Referenzspannungsgebers 22 vergleicht und über den regelbaren Verstärker 14 konstant hält. Somit ist gewährleistet, dass das durch den Tiefpass 19 geglättete Signal $S_1$ des ersten Messkanals, das mittels eines Anzeigeverstärkers 12 verstärkt schliesslich an einem Anzeigegerät 23 zur Anzeige gebracht wird, dem Quotienten aus erstem und zweitem Fourierkoeffizienten des Signalgemischs aus den Fig. 3A und 3E proportional ist. Dem Signal $S_1$ kann für Kompensationszwecke eine Gleichspannung eines Gleichspannungsgebers 11 überlagert werden.

Die Analyse des zeitlichen Signalverlaufs ergibt für den ersten und den zweiten Fourierkoeffizienten $F_1$ und $F_2$ unter der Annahme, dass die geometrischen Formen der Filterfassungen des Modulatorblendenrads 5 exakt gleich sind:

$$F_1 = a_1 \cdot (\tau_A I_1 - I_2) \qquad (1)$$
$$F_2 = a_2 \cdot (\tau_A I_1 + I_2) \qquad (2)$$

Dabei sind $a_1$ und $b_1$ Gerätekonstanten, die durch die geometrische Anordnung bestimmt sind.

Unter der Annahme, dass die einzelnen Filter 6 und 7 so ausgesucht sind, dass ihre integralen Transmissionen gleich sind, also $I_1 = I_2$ gilt, ergeben sich für die Fourierkoeffizienten:

$$F_1 = a_1 \cdot (\tau_A - 1)\, I_1 \qquad (3)$$
$$F_2 = a_2 \cdot (\tau_A + 1)\, I_2 \qquad (4)$$

Das zur Anzeige gebrachte Messsignal ist der Quotient aus diesen beiden Grössen:

$$S_1 \sim \frac{1 - \tau_A}{1 + \tau_A} \qquad (5)$$

Durch die Quotientenbildung wird das Signal unabhängig von der Lichtintensität und damit driftfrei in Hinblick auf «graue», also spektral unabhängige Intensitätsänderungen, wie sie beispielsweise durch eine Fensterverschmutzung bedingt werden.

Die Transmission $\tau_A$ der Messsubstanz A ist eine Integralfunktion der spektralen Transmission, gemittelt über die Interferenzfilter-Durchlasskurve bei $\lambda_A$.

Für kleine Produkte $\overline{\varepsilon(\lambda)} \cdot c \cdot 1$, wobei $\overline{\varepsilon(\lambda)}$ der im Durchlassbereich des Interferenzfilters gemittelte spezifische Absorptionskoeffizient und c die Konzentration der Messkomponente A und 1 die optische Weglänge im Messmedium ist, lässt sich die Transmission in eine Taylorreihe entwickeln:

$$\tau = 1 - \overline{\varepsilon} \cdot cl \pm \ldots \qquad (6)$$

Diese Näherung lässt sich durch geeignete Wahl des spektralen Transmissionsfensters des Interferenzfilters sowie der optischen Weglänge 1 des möglicherweise als Küvette ausgebildeten Messraums 4 immer einstellen. Wird die Näherung gemäss Gleichung (6) in Gleichung (5) eingeführt, so erhält man:

$$S_1 \sim \frac{\overline{\varepsilon} \cdot cl}{2 + \overline{\varepsilon} cl} \approx \frac{1}{2} \cdot \overline{\varepsilon} \cdot cl \qquad (7)$$

Das Signal ist eine streng monoton wachsende Funktion der Konzentration der Messkomponente A. Die Empfindlichkeit des erfindungsgemässen Verfahrens wird im wesentlichen durch die effektive optische Messstrecke 1 und durch die spektroskopischen Daten der Messkomponente A, nämlich durch $\overline{\varepsilon(\lambda)}$ bestimmt, hängt also beim Bifrequenzverfahren von der Wahl der Zentrumswellenlänge und Halbwertsbreite der Interferenzfilter und beim Gasfilterkorrelationsverfahren von der Konzentration des Korrelationsgases in der Filterküvette ab.

In der Praxis ist ein Kompromiss zu schliessen zwischen der Empfindlichkeit und der Linearität, wobei letzteres nicht ganz so kritisch zu bewerten ist. Gemäss Gleichung (5) enthält das Signal $S_1$ die Messkomponententransmission auch im Nenner des Quotienten. Hierdurch wird zwar etwas die Empfindlichkeit bei kleiner Konzentration reduziert, gleichzeitig aber auch die Linearität der Transmission bei höheren Konzentrationen kompensiert.

Es ist nicht zu erwarten, dass beide Interferenzfilter 6 und 7 des Modulationsblendenrads 5 dieselbe integrale Transmission aufweisen, weil sie beispielsweise durch Fertigungsschwankungen hinsichtlich der Lage des Transmissionsmaximums und der halbwertsbreite Streuungen unterliegen. Darüber hinaus besitzen der Strahler 1 und der Detektor 10 Spektralgänge, die die integrale Transmission auf beiden Messkanälen beeinflussen. Solche Differenzen $(I_1–I_2)$ stören aber beim Geräteabgleich; insbesondere ist das Signal $S_1$ nicht Null, wenn die Konzentration Null ist. Dies gilt naturgemäss für die Gasfilterkorrelationstechnik, wo die Intensitäten $I_1$ und $I_2$ von vornherein durch die selektive Vorabsorption im Gasfilter unterschiedlich sind.

Zur Kompensation dieser Effekte werden zwei Massnahmen vorgeschlagen. Es kann beispielsweise eine Einrichtung vorgesehen werden, die mechanischer Art ist und als einstellbare Blende für dasjenige Gasfilter oder Interferenzfilter wirkt, das die höhere integrale Transmission besitzt. Diese Blende wird auf dem rotierenden Modulatorblendenrad befestigt und deckt die Strahlöffnung des entsprechenden Filters ab, so dass die Kompensation $I_1 = I_2$ ohne Vorliegen der Messkomponente A erfolgt.

Weit einfacher ist der Abgleich mittels einer elektronischen Einrichtung, die eine konstante Gleichspannung $U_0$ zum Signal $S_1$ addiert (die mit 11 und 12 bezeichneten Elemente gemäss Fig. 4) und so die Kompensation auf Null ermöglicht für den Fall, dass die Konzentration der Messkomponente Null ist:

$$S_1 = U_o + b \cdot \frac{I_2 - \tau_A \cdot I_1}{I_2 + \tau_A \cdot I_1} \qquad (8)$$

Dabei ist b eine Konstante. Der Abgleich bei $c = 0 \Rightarrow \tau_A = 1$ erfordert nun:

$$U_o = -b \cdot \frac{I_2 - I_1}{I_2 + I_1} \qquad (9)$$

Ist das Auftreten von Störkomponenten im Messraum zu erwarten, deren Absorptionsbande sich mit denen der Messkomponente überlappen, so sind folgende Kompensationsmassnahmen möglich. Beim Bifrequenzverfahren wählt man die Spektrallage $\lambda_0$ des Referenz-Interferenzfilters so, dass dieses einen anderen Teil der Störkomponentenbanden erfasst, nämlich dort, wo die Messkomponente A selbst nicht oder nur schwach absorbiert. Dann wird die Intensitätsschwächung bei $\lambda_A$ durch die Störkomponente mittels einer ebenso grossen Schwächung bei $\lambda_0$ kompensiert.

Im Falle der Gasfilter-Technik können beide Korrelationsküvetten zusätzlich mit der Störkomponente gefüllt werden, so dass der Einfluss derselben im Messraum 4 eliminiert wird.

Selbstverständlich sind die üblichen Filtertechniken, beispielsweise durch fest im Strahlengang installierte Filterküvetten gefüllt mit der Störkomponente, ebenfalls anwendbar.

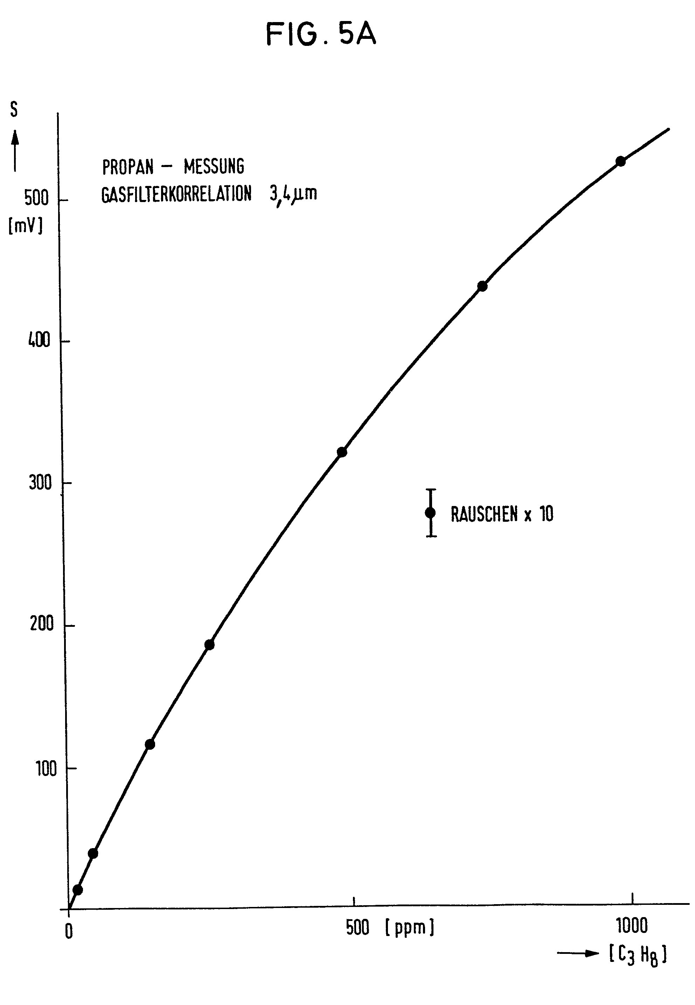

Fig. 5A zeigt ein erstes Anwendungsbeispiel aus der Gasanalyse, nämlich die Messergebnisse für ein Propan-Messgerät. Hierbei wurde mit der Gasfilter-Korrelation gearbeitet, wobei die Küvetten jeweils mit 100 Vol% $N_2$ bzw. $C_3H_6$ gefüllt waren. Die Länge der Küvetten betrug 150 cm, und der Spektralbereich lag bei 3,4 µm, gefiltert durch ein schmalbandiges Interferenzfilter.

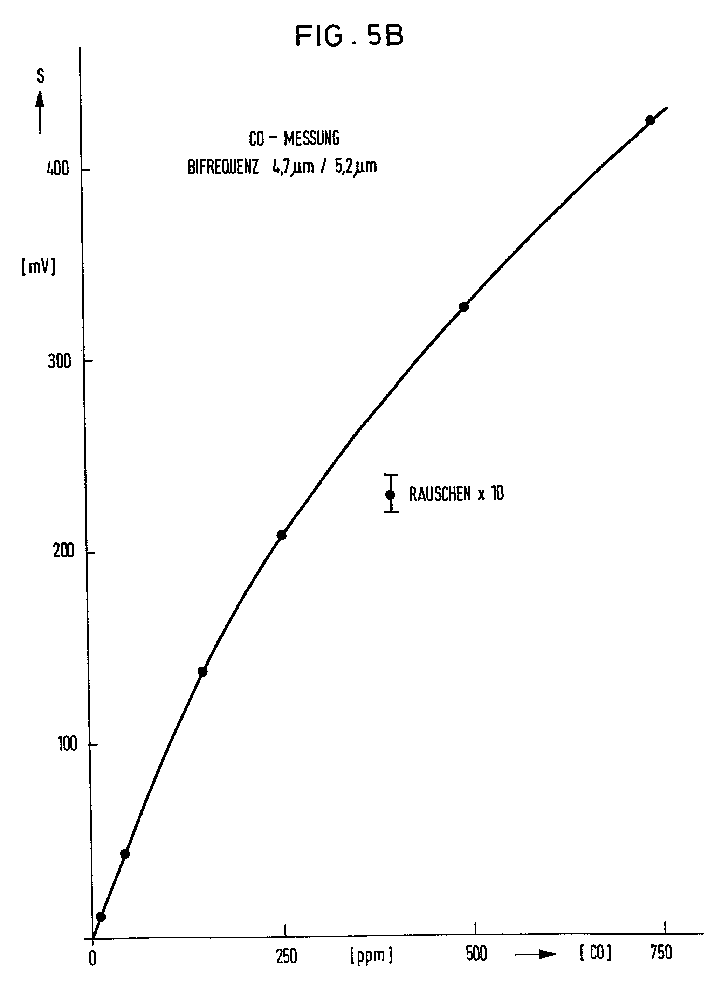

Bei dem zweiten Anwendungsbeispiel gemäss Fig. 5B sind die Messergebnisse erreicht nach dem Bifrequenzverfahren mit $\lambda_A = 4,63$ µm. HWB $= 0,17$ µm, $\lambda_0 = 5,24$ µm und HWB $= 0,08$ µm gezeigt. Auch hier wurde mit einer Küvettenlänge von 150 cm gearbeitet.

In beiden Fällen wurden ein pyroelektrischer Detektor verwendet.

HWB = Halbwertsbreite.

**Patentansprüche**

1. Verfahren zur Messung der Konzentration eines IR-, NIR-, VIS- und UV-Strahlung absorbierenden Gases in einer Gasmatrix oder einer in einem Lösungsmittel gelösten Substanz, bei dem der einen mit dem Komponentengemisch gefüllten Messraum (4) durchsetzenden Strahlung vor, in oder hinter dem Messraum (4) mittels einer Modulation mit einer Kreisfrequenz ω zwei periodisch aufeinander folgende, jeweils durch Dunkelphasen voneinander getrennte spektrale Zustände aufgeprägt werden, wobei der erste Zustand mittels eines Filters (6) eingestellt wird, das im Bereich des Absorptionsspektrums der Messkomponenten selektiv absorbiert oder selektiv transmittiert, während der zweite Zustand mittels eines Filters (7) eingestellt wird, das im Bereich weder des Absorptionsspektrums der Messkomponente noch im Bereich der Spektren etwaiger Störkomponenten selektiv absorbiert oder selektiv transmittiert, bei dem der diskontinuierlich wellenlängenmodulierte Intensitätsverlauf mit einem Breitband-Detektor (10) gemessen wird, bei dem das Ausgangssignal dieses Detektors (10) mit den Kreisfrequenzen ω und 2ω phasenempfindlich gleichgerichtet wird unter Bildung von zwei Signalen $S_1$ und $S_2$, wobei 2π/ω die Periodendauer über die zwei periodisch aufeinander folgenden spektralen Zustände mit den diese trennenden Dunkelphasen darstellt, und bei dem der Quotient $S_1/S_2$ dieser Signale gebildet wird, und zwar als Mass für die zu messende Konzentration der Messkomponente A.

2. Verfahren nach Anspruch 1, dadurch gekennzeichnet, dass der erste Zustand mittels eines Gasfilters eingestellt wird, das im Bereich des Absorptionsspektrums der Messkomponente A selektiv absorbiert.

3. Verfahren nach Anspruch 1, dadurch gekennzeichnet, dass der erste Zustand mittels eines Interferenzfilters eingestellt wird, das im Bereich des Absorptionsspektrums der Messkomponente A selektiv transmittiert.

4. Verfahren nach einem der Ansprüche 1 bis 3, dadurch gekennzeichnet, dass der zweite Zustand mittels eines Gasfilters eingestellt wird, das im Bereich weder des Absorptionsspektrums der Messkomponente A noch deren Spektren selektiv absorbiert.

5. Verfahren nach einem der Ansprüche 1 bis 3, dadurch gekennzeichnet, dass der zweite Zustand mittels eines Interferenzfilters eingestellt wird, das im Bereich weder des Absorptionsspektrums der Messkomponente A noch deren Spektren selektiv transmittiert.

6. Vorrichtung zur Messung der Konzentration eines IR-, NIR-, VIS- oder UV-Strahlung absorbierenden Gases in einer Gasmatrix oder einer in einem Lösungsmittel gelösten Substanz, bei welcher Vorrichtung einem Strahler (1) ein Blendenrad (5) als Spektralmodulator und ein mit dem zu untersuchenden Komponentengemisch gefüllter Messraum (4) nachgeordnet sind, im Strahlengang hinter diesen ein Breitbanddetektor (10) angeordnet ist, und zwar unter Vorschaltung einer die Strahlung auf ihn fokussierenden Linse (8), bei der der Spektralmodulator (5) mit einer Kreisfrequenz ω zu arbeiten in der Lage ist und zwei durch Dunkelphasen getrennte Filter (6, 7) vorgesehen sind, deren erstes (6) im Bereich des Absorptionsspektrums der Messkomponente A selektiv absorbiert oder selektiv transmittiert und deren zweites (7) im Bereich weder des Absorptionsspektrums der Messkomponente A noch im Bereich der Spektren etwaiger Störkomponenten selektiv absorbiert oder selektiv transmittiert, bei der der Detektor (10) ausgangssignalseitig an eine Messwertverarbeitungseinrichtung angeschlossen ist, die ausgangssignalseitig an ein Anzeigegerät (23) angeschlossen ist und bei der Mittel (17, 18, 24, 25) zum phasenempfindlichen Gleichrichten des Ausgangssignals des Detektors (10) mit der einfachen und der doppelten Kreisfrequenz ω bzw. 2ω der Modulation unter Bildung von zwei Signalen $S_1$ und $S_2$ und Mittel (14, 16, 18, 20, 21, 22) zur Bildung zu messende Konzentration der Messkomponente A vorhanden sind.

7. Vorrichtung nach Anspruch 6, dadurch gekennzeichnet, dass die Messwertverarbeitungseinrichtung über einen Vorverstärker (13) an den Detektor (10) angeschlossen ist und über zwei parallel geschaltete frequenzselektierende Filter (15, 16) je mit einem nachgeschalteten phasenempfindlichen Gleichrichter (17, 18) verfügt, wobei beide Gleichrichter (17, 18) je zum Abgleich über einen Phasenschieber (25) an einen Referenzsignalbildner, der mit dem Blendenrad (5) zusammenwirkt und einen Referenzsignalvorverstärker (24) ansteuert, und ausgangsseitig je an einen Tiefpass angeschlossen sind, wobei die Tiefpassausgänge über einen Dividierer an das Anzeigegerät (23) angeschlossen sind.

8. Vorrichtung nach Anspruch 6, dadurch gekennzeichnet, dass die Messwertverarbeitungseinrichtung über einen Vorverstärker (13) an den Detektor (10) angeschlossen ist und über zwei parallel geschaltete frequenzselektierende Filter (15, 16) je mit einem nachgeschalteten phasenempfindlichen Gleichrichter (17, 18) verfügt, wobei beide Gleichrichter (17, 18) je zum Abgleich über einen Phasenschieber (25) an einen Referenzsignalbildner, der mit dem Blendenrad (5) zusammenwirkt und einen Referenzsignalvorverstärker (24) ansteuert, und ausgangsseitig der eine Gleichrichter (17) an einen Tiefpass (19) und der andere Gleichrichter (18) an einen Integrator (20) angeschlossen sind und der Integrator (20) ausgangsseitig an einen Regelverstärker (21) angeschlossen ist, der seinerseits eingangsseitig des weiteren an einen Referenzgleichspannungsgeber (22) und ausgangsseitig an den zweiten Eingang des dem Detektor (10) nachgeschalteten regelbaren Verstärkers (14) angeschlossen ist, während der Tiefpass (19) über einen Anzeigeverstärker (12), dessen zweiter Eingang an einen Gleichspannungsgeber (11) angeschlossen ist, an das Anzeigegerät (23) angeschlossen ist.

9. Vorrichtung nach Anspruch 6, dadurch gekennzeichnet, dass das erste Filter (6) ein Gasfilter ist, das im Bereich des Absorptionsspektrums der Messkomponente A selektiv absorbiert.

10. Vorrichtung nach Anspruch 6, dadurch gekennzeichnet, dass das erste Filter (6) ein Interferenzfilter ist, das im Bereich des Absorptionsspektrums der Messkomponente A selektiv transmittiert.

11. Vorrichtung nach einem der Ansprüche 6 bis 10, dadurch gekennzeichnet, dass das zweite Filter (7) ein Gasfilter ist, das im Bereich weder des Absorptionsspektrums der Messkomponente A nach deren Spektren selektiv absorbiert.

12. Vorrichtung nach einem der Ansprüche 6 bis 10, dadurch gekennzeichnet, dass das zweite Filter (7) ein Interferenzfilter ist, das im Bereich weder des Absorptionsspektrums der Messkomponente A noch deren Spektren selektiv transmittiert.

**Claims**

1. A method of measurement of the concentration of a gas which absorbs infrared, near infrared, visible or ultraviolet radiation in a gas matrix or a substance dissolved in a solvent, being a method in which there are impressed upon the radiation passing through an experiment chamber (4) filled with the mixture of constituents, in front of, in or beyond the experiment chamber (4) by means of a modulation by an angular frequency ω two spectral states following one another periodically and separated from one another respectively by dark phases, where the first state is set by means of a filter (6) which in the range of the absorption spectrum of the measuring constituents selectively absorbs or selectively transmits, whilst the second state is set by means of a filter (7) which neither in the range of the absorption spectrum of the measuring constituents nor in the range of the spectra of possible interference constituents selectively absorbs or selectively transmits, in which the discontinuously wavelength-modulated trend of intensity is measured by a wideband detector (10), in which the output signal from this detector (10) is rectified by the angular frequencies $\omega$ and $2\omega$ phase-sensitively with the formation of two signals $S_1$ and $S_2$, where $2\pi/\omega$ represents the period over the two spectral states following one another periodically with the dark phases separating them, and in which the quotient $S_1/S_2$ is formed from these signals, that is, as the measure of the concentration of the measuring constituents A which is to be measured.

2. A method as in Claim 1, characterized in that the first state is set by means of a gas filter which in the range of the absorption spectrum of the measuring constituents A selectively absorbs.

3. A method as in Claim 1, characterized in that the first state is set by means of an interference filter which in the range of the absorption spectrum of the measuring constituents A selectively transmits.

4. A method as in one of the Claims 1 to 3, characterized in that the second state is set by means of a gas filter which in the range neither of the absorption spectrum of the measuring constituents A nor of their spectra selectively absorbs.

5. A method as in one of the Claims 1 to 3, characterized in that the second state is set by means of an interference filter which in the range neither of the absorption spectrum of the mea suring constituents A nor of their spectra selectively transmits.

6. A device for the measurement of the concentration of a gas which absorbs infrared, near infrared, visible or ultraviolet radiation in a gas matrix or a substance dissolved in a solvent, there being arranged in the said device after an emitter (1) a shutter wheel (5) as a spectral modulator and an experiment chamber (4) filled with the mixture of constituents which is to be tested, and in the path of the rays beyond the latter a wideband detector (10), that is, with a lens (8) connected before it to focus the radiation upon it, the spectral modulator (5) in the said device being in a position to work at an angular frequency $\omega$ and two filters (6, 7) separated by dark phases being provided, the first (6) of which in the range of the absorption spectrum of the measuring constituents A selectively absorbs or selectively transmits and the second (7) of which neither in the range of the absorption spectrum of the measuring components A nor in the range of the spectra of possible interference constituents selectively absorbs or selectively transmits, the detector (10) in the said device being connected at the output signal side to a measured value processing device which at the output signal side is connected to an indicator (23), and in the said device means (17, 13, 24, 25) are available for the phase-sensitive rectification of the output sig nal from the detector (10) by the single and double angular frequencies $\omega$ and

$2\omega$ respectively of the modulation with the formation of two signals $S_1$ and $S_2$, and means (14, 16, 18, 20, 21, 22) are available for the formation of the quotient $S_1/S_2$ of these signals as the measure of the concentration of the measuring constituents A which is to be measured.

7. A device as in Claim 6, characterized in that the measured value processing device is connected via a preamplifier (13) to the detector (10) and has at its disposal two parallel-connected frequency-selecting filters (15, 16), each with a phase-sensitive rectifier (17, 18) connected after it, the two rectifiers (17, 18) being connected each for compensation via a phase shifter (25) to a reference signal generator which cooperates with the shutter wheel (5) and energizes a reference signal preamplifier (24), and at the output side each to a lowpass filter, the lowpass filter outputs being connected via a divider to the indicator (23).

8. A device as in Claim 6, characterized in that the measured value processing device is connected via a preamplifier (13) to the detector (10) and has at its disposal two parallel-connected frequency-selecting filters (15, 16), each with a phase-sensitive rectifier (17, 18) connected after it, the two rectifiers (17, 18) being connected each for compensation via a phase shifter (25) to a reference signal generator which cooperates with the shutter wheel (5) and energizes a reference signal preamplifier (24), and at the output side the one rectifier (17) is connected to a lowpass filter (19) and the other rectifier (18) is connected to an integrator (20) and the integrator (20) at the output side is connected to a variable-gain amplifier (21) which in turn at the input side is moreover connected to a reference d.c. voltage generator (22) and at the output side to the second input to the variable-gain amplifier (14) connected after the detector (10), whilst the lowpass filter (19) via a detector amplifier (12) the second input to which is connected to a d.c. voltage generator (11), is con nected to the indicator (23).

9. A device as in Claim 6, characterized in that the first filter (6) is a gas filter which in the range of the absorption spectrum of the measuring constituents A selectively absorbs.

10. A device as in Claim 6, characterized in that the first filter (6) is an interference filter which in the range of the absorption spectrum of the measuring constituents A selectively transmits.

11. A device as in one of the Claims 6 to 10, characterized in that the second filter (7) is a gas filter which in the range neither of the absorption spectrum of the measuring constituents (A) nor of their spectra selectively absorbs.

12. A device as in one of the Claims 6 to 10, characterized in that the second filter (7) is an interference filter which in the range neither of the absorption spectrum of the measuring constituents A nor of their spectra selectively transmits.

### Revendications

1. Procédé pour la mesure de la concentration d'un gaz absorbant le rayonnement infrarouge, infrarouge proche, visible ou ultraviolet dans une matrice à gaz ou dans une substance dissoute dans un solvant, procédé dans lequel il est imprimé au rayonnement qui traverse une chambre de mesure (4) remplie du mélange de composants, avant, dans ou après la chambre de mesure (4), au moyen d'une modulation aved .une fréquence angulaire ω, deux états spectraux qui se suivent périodiquement et sont séparés chaque fois l'un de l'autre par des phases d'obscurité, le premier état étant établi au moyen d'un filtre (6) qui absorbe sélectivement ou transmet sélectivement dans la gamme du spectre d'absorption du composant mesuré, tandis que le second état est établi au moyen d'un filtre (7) qui n'absorbe sélectivement ou ne transmet sélectivement ni dans la gamme du spectre d'absorption du composant mesuré, ni dans la gamme des spectres d'éventuels composants perturbateurs, dans lequel la variation d'intensité, modulée en logueur d'onde de façon discontinue, est mesurée avec un détecteur à large bande (10), dans lequel le signal de sortie de ce détecteur (10) est redressé de façon sensible à la phase avec les fréquences angulaires ω et 2ω, avec formation de deux signaux $S_1$ et $S_2$, $2\pi/\omega$ représentant la durée de période des deux états spectraux qui se suivent périodiquement avec les phases d'obscurité qui séparent ceux-ci, et dans lequel le quotient $S_1/S_2$ de ces signaux est formé, et cela en tant que mesure de la concentration à mesurer du composant mesuré A.

2. Procédé selon la revendication 1, caractérisé en ce que le premier état est établi au moyen d'un filtre à gaz qui absorbe sélectivement dans la gamme du spectre d'absorption du composant mesuré A.

3. Procédé selon la revendication 1, caractérisé en ce que le premier état est établi au moyen d'un filtre d'interférence qui transmet sélectivement dans la gamme du spectre d'absorption du composant mesuré A.

4. Procédé selon l'une quelconque des revendications 1 à 3, caractérisé en ce que le second état est établi au moyen d'un filtre à gaz qui n'absorbe sélectivement ni dans la gamme du spectre d'absorption du composant mesuré A, ni dans la gamme des spectres de celui-ci.

5. Procédé selon l'une quelconque des revendications 1 à 3, caractérisé en ce que le second état est établi au moyen d'un filtre d'interférence qui ne transmet sélectivement ni dans la gamme du spectre d'absorption du composant mesuré A, ni dans la gamme des spectres de celui-ci.

6. Dispositif pour la mesure de la concentration d'un gaz absorbant le rayonnement infrarouge, infrarouge proche, visible ou ultraviolet dans une matrice à gaz ou dans une substance dissoute dans un solvant, dispositif dans lequel il est disposé, à la suite d'une source de rayonnement (1), une roue à diaphragme (5) servant de modulateur spectral et une chambre de mesure (4) remplie du mélange de composants à examiner, il est disposé, en aval de celles-ci dans le trajet des rayons, un détecteur à large bande (10) précédé d'une lentille (8) qui focalise le rayonnement sur lui, dans lequel le modulateur spectral (5) est en mesure de fonctionner avec une fréquence angulaire ω et il est prévu deux filtres (6, 7) séparés par des phases d'obscurité, dont le premier (6) absorbe sélectivement ou transmet sélectivement dans la gamme du spectre d'absorption du composant mesuré A et dont le second (7) n'absorbe sélectivement ou ne transmet sélectivement ni dans la gamme du spectre d'absorption du composant mesuré A, ni dans la gamme des spectres d'éventuels composants perturbateurs, dans lequel le détecteur (10) est raccordé, du côté du signal de sortie, à un dispositif de traitement de valeur mesurée qui est raccordé, du côté du signal de sortie, à un appareil d'affichage (23) et dans lequel il est prévu des moyens (17, 13, 24, 25) pour le redressement, sensible à la phase, du signal de sortie du détecteur (10) à la fréquence angulaire simple et double (ω, 2ω) de la modulation avec formation de deux signaux $S_1$ et $S_2$ et des moyens (14, 16, 18, 20, 21, 22) pour la formation du quotient $S_1 S_2$ de ces signaux ent tant que mesure de la concentration à mesurer du composant mesuré A.

7. Dispositif selon la revendication 6, caractérisé en ce que le dispositif de traitement de valeur mesurée est raccordé par l' intermédiaire d'un pré-amplificateur (13) au détecteur (10) et comporte deux filtres (15, 16) sélectionnant la fréquence, montés en parallèle, avec un redresseur sensible à la phase (17, 18) monté à la suite de chacun d'eux, les deux redresseurs (17, 18) étant raccordés chacun pour l'égalisation, par l'intermédiaire d'un décaleur de phase (25), à un générateur de signal de reférence qui coopère avec la roue à diaphragme (5) et commande un pré-amplificateur de signal de référence (24), et étant raccordés chacun, du côté sortie, à un filtre passe-bas, les sorties des filtres passe-bas étant raccordées par l'intermédiaire d'un diviseur à l'appareil d'affichage (23).

8. Dispositif selon la revendication 6, caractérisé en ce que le dispositif de traitement de valeur mesurée est raccordé par l'intermédiaire d'un pré-amplificateur (13) au détecteur (10) et comporte deux filtres (15, 16) sélectionnant la fréquence, montés en parallèle, avec un redresseur sensible à la phase (17, 18) monté à la suite de chacun d'eux, les deux redresseurs (17, 18) étant raccordés chacun pour l'égalisation, par l'intermédiaire d'un décaleur de phase (25), à un générateur de signal de référence qui coopère avec la roue à diaphragme (5) et commande un pré-amplificateur de signal de référence (24) et, du côté sortie, l'un des redresseurs (17) étant raccordé à un filtre passe-bas (19) et l'autre redresseur (18) à un intégrateur (20) et l'intégrateur (20) étant raccordé du côté sortie à un amplificateur de réglage (21) qui est de son côté raccordé par ailleurs, du côté entrée, à un générateur de tension continue de référence (22) et, du côté sortie, à la seconde entrée de l'amplificateur réglable (14) monté à la suite du détecteur (10), tandis que le filtre passe-bas (19) est raccordé à l'appareil d'affichage (23) par l'intermédiaire d'un amplificateur d'affichage (22) dont la seconde entrée est raccordée à un générateur de tension continue (11).

9. Dispositif selon la revendication 6, caractérisé en ce que le premier filtre (6) est un filtre à gaz qui absorbe sélectivement dans la gamme du spectre d'absorption du composant mesuré A.

10. Dispositif selon la revendication 6, caractérisé en ce que le premier filtre (6) est un filtre d'interférence qui transmet sélectivement dans la gamme du spectre d'absorption du composant mesuré A.

11. Dispositif selon l'une quelconque des revendications 6 à 10, caractérisé en ce que le second filtre (7) est un filtre à gaz qui n'absorbe sélectivement ni dans la gamme du spectre d'absorption du composant mesuré A, ni dans la gamme des spectres de celui-ci.

12. Dispositif selon l'une quelconque des revendications 6 à 10, caractérisé en ce que le second filtre (7) est un filtre d'interférence qui ne transmet sélectivement ni dans la gamme du spectre d'absorption du composant mesuré A, ni dans la gamme des spectres de celui-ci.

FIG . 1

# FIG.2

I(t)

$I_1 (\lambda_A)$    $I_2 (\lambda_0)$

FIG. 3A

0    $\pi / \omega$    $2\pi / \omega$    t

$I(\lambda)$

$I_1$    $I_2$

FIG. 3B

$\lambda_A$    $\lambda_0$    $\lambda$

$\tau(\lambda)$

$\tau_A$

FIG. 3C

$\lambda_A$    $\lambda$

$\tau \cdot I(\lambda)$

$I_2$

$\tau_A \cdot I_1$

FIG. 3D

$\lambda_A$    $\lambda_0$    $\lambda$

$\tau \cdot I(t)$

$I_2$

$\tau_A \cdot I_1$

FIG. 3E

0    $\pi / \omega$    $2\pi / \omega$    t

15

# FIG . 4

# FIG. 5A

PROPAN — MESSUNG
GASFILTERKORRELATION 3,4μm

S
[mV]

500

400

300

200

100

RAUSCHEN x 10

0          500  [ppm]          1000

[C₃H₈]

# FIG . 5B

CO – MESSUNG
BIFREQUENZ  4,7 μm / 5,2 μm

RAUSCHEN x 10